Europäisches Patentamt

(19) European Patent Office  (11) Publication number: **0 025 060**

Office européen des brevets  **B1**

(12)  EUROPEAN PATENT SPECIFICATION

(45) Date of publication of patent specification: **24.10.84**  (51) Int. Cl.³: **H 01 M 2/16**

(21) Application number: **80900623.2**

(22) Date of filing: **11.03.80**

(86) International application number:
**PCT/US80/00255**

(87) International publication number:
**WO 80/01969 18.09.80 Gazette 80/21**

(54) **SEPARATOR FOR STARVED ELECTROLYTE LEAD/ACID BATTERY.**

(30) Priority: **12.03.79 US 19805**
**17.05.79 US 39708**

(43) Date of publication of application:
**18.03.81 Bulletin 81/11**

(45) Publication of the grant of the patent:
**24.10.84 Bulletin 84/43**

(84) Designated Contracting States:
**AT CH DE FR GB LU NL SE**

(56) References cited:
**EP-A-0 003 481**
**WO-A-81/02368**
**FR-A-2 263 609**
**NL-A-7 804 366**
**US-A- 636 142**
**US-A- 693 676**
**US-A-1 879 562**
**US-A-1 942 668**
**US-A-2 428 470**
**US-A-2 634 207**
**US-A-2 634 208**

(73) Proprietor: **JOHNS-MANVILLE CORPORATION**
**Ken-Caryl Ranch Post Office Box 5108**
**Denver, CO 80217 (US)**

(72) Inventor: **GROSS, Stephen Edward**
**6301 West Alder Avenue**
**Littleton, CO 80123 (US)**
Inventor: **CAIN, Clifford William, Junior**
**2391 West Caley Avenue**
**Littleton, CO 80120 (US)**
Inventor: **BILAWSKY, Paul Damian**
**2185 South Field Way**
**Lakewood, CO 80227 (US)**
Inventor: **SCHEFFEL, Norman Bach**
**362 Woodland Trail**
**Parker, CO 80134 (US)**

(74) Representative: **Grättinger, Günter et al**
**Grättinger & Partner Patentanwälte**
**Almeidaweg 35 Postfach 16 49**
**D-8130 Starnberg (DE)**

Courier Press, Leamington Spa, England.

**0 025 060**

(58) References cited:
US-A-2 705 198
US-A-3 010 835
US-A-3 042 578
US-A-3 085 126
US-A-3 085 887
US-A-3 862 861
US-A-4 126 512
US-A-4 150 199

## Description

The invention herein relates to lead/acid electric storage batteries. More particularly it relates to separators and a paper as separator material in such batteries.

Separators for lead batteries are known comprising glass fibers, synthetic thermoplastic fibres and siliceous porous particulate material (compare FR—A—22 63 609). Further, separators for batteries are known composed of glass fibres mixed with various porous particulate materials (compare US—A—1 879 562, 1 942 668 and 2 428 470). Recently efficient maintenance-free rechargeable sealed lead/acid storage batteries utilizing a "starved electrolyte" concept have been introduced commercially. Various aspects of batteries of this type are disclosed in a number of patents, notably U.S. Patent No. 3 862 861. Such batteries normally utilize as separators materials such as microporous rubber, polyvinyl chloride, polyolefins, phenolic resin impregnated paper or (preferably) glass paper made from microfiber diameter, unwoven, short staple glass fibers. These batteries, while useful in a wide variety of applications, have been severely limited in the practical sizes which can be commercially utilized because of the high cost of these batteries per unit of energy density. Thus, while cells of the common C, D, "beer can" and similar sizes are practical for some purposes commercially, larger sizes such as the typical automotive battery size are far too costly for commercial practicality. Similarly, the high unit density cost of even the smaller size batteries have restricted these types of batteries to high value end uses such as in spacecraft and emergency equipment, effectively eliminating the batteries from the fields of conventional consumer use such as flashlights, radios and the like.

In these types of batteries a very high proportion of the cost of battery materials lies in the cost of the separator. The preferred microfiber glass paper separators are extremly costly. In the past, however, all attempts to substitute lower cost material have led to battery structures with significantly poorer electrical characteristics.

It would therefore be highly desirable to have a separator material (as defined herein) suitable for use in batteries of the type described which will provide equivalent or superior electrical characteristics as compared to the present high cost materials, but which would utilize materials having a markedly lower cost than the present materials, thus making the batteries economically feasible for use in a much wider range of application, particularly including the automotive ("SLI") battery market.

## Brief Summary of the Invention

The invention here uses in a starved electrolyte lead/acid battery a separator composition which comprises a mixture of 30 percent to 80 percent by weight of expanded perlite and 20 percent to 70 percent by weight of glass fiber, wherein the glass fibers have diameters in the range of from about 0.3 to about 1.0 micrometers and the perlite has particle sizes in the range of from about 3 to about 100 micrometers. These compositions have been found to be essentially equivalent in all important physical, chemical and electrical properties to the microporous glass papers but are of approximately only half the cost.

## Detailed Description of the Invention

The articles utilizing the compositions are denominated "separators" for the starved electrolyte lead/acid batteries, following the nomenclature of the prior patents, especially the aforesaid U.S. Patent No. 3,862,861. However, it will be recognized from the structure of these starved electrolyte batteries that the articles, unlike separators in conventional batteries, are multi-functional, in that they possess not only a separator function but also a reservoir function, wherein they serve to retain the electrolyte within the battery. It is believed that the microporous nature and the high specific surface area of the present articles, with their myriads of minute passageways and interstices, impart to the articles their ability to combine these different functions. For the purposes of this specification, therefore, the practice of the aforesaid prior patents in labeling these articles "separators" will be adhered to, but the difference between the present multifunctional articles (with their "separator/reservoir" nature) and conventional battery separators should be recognized.

The compositions herein are formed from a mixture of expanded perlite granules and small diameter glass fibers.

Perlite is a rhyolitic glassy rock formed by volcanic action. Perlite is unique among the glassy materials in that it contained a significant proportion of combined water which, when the perlite is crushed and rapidly heated, is converted to steam and causes the perlite granules to expand of "pop" to form expanded perlite granules with volumes some 4 to 20 times greater than the volume of the original unexpanded particles. Bulk densities of the expanded materials are commonly in the range of from about 0.03 to about 0.25 $g/cm^3$. The high volume low bulk density expanded perlite has in the past been used in a variety of applications, including as filter aids, thermal insulation (also in paper-like sheets made of a mixture of perlite and fibrous material such as glass fiber), lightweight concrete aggregates and for horticultural use. However, expanded perlite has never before been considered as having utility in electric batteries.

In the compositions used in this invention the perlite will be present in the form of generally irregular particles having nominal particle sizes in the range of from about 3 to about 100 micrometers. Most suitable for use in the present invention are those grades of perlite having particle sizes in the range of from about 10 to about 35 micrometers. Suitable grades of perlite are available commercially from Johns-Manville Corporation. In the basic two-component composition, the perlite will be present as from about 15 percent to about 80 percent, preferably 50 percent to 70 percent, of the composition. (Unless otherwise states, all percentages herein are by weight.)

Since perlite is a natural material, the composition of batches taken from different ore bodies or even different parts of the same ore body will normally vary, sometimes widely, but normally within fairly well defined limits. Typical perlite chemical analyses show 71 percent to 75 percent $SiO_2$. 12 percent to 18 percent $Al_2O_3$, 7 percent to 9 percent $K_2O$ and $Na_2O$ with the remainder being a wide variety of other oxides and elements including materials such as calcium, iron, magnesium and titanium oxides. Typical analyses are described in *Industrial Minerals*, page 17 (May, 1977). The exact composition of the perlite is not critical in this invention, as long as the perlite used is chemically and electrically compatible with the other materials in the present separator compositions and also in the assembled batteries.

The glass fibers used in the present compositions may be any of a wide variety of glass fiber forming compositions. The fibers formed from such compositions must have average volume surface diameters in the range of from 0.3 to 1.0 micrometers. Typical glass compositions for glass fibers useful in this invention include those shown in U.S. Patent No. 3,085,887. The glass fibers will be present in the composition as from about 20 percent to about 70 percent, preferably 30 percent to 50 percent, of the composition. Compositions containing less than about 20 percent of glass fiber do not produce papers with adequate physical integrity to withstand handling, while those with more than about 85 percent glass fiber give no added electrical properties but are significantly costlier.

For some uses it may be desirable to have increased tensile strength in the papers. For example, in some battery production methods, the separator is in the form of a long paper strip which is wound in a spiral fashion with the electrical plate materials to form cylindrical batteries. Typical of this type of construction are the batteries shown in the aforementioned U.S. Patent No. 3,862,861. The winding operations to form such batteries are performed at high speed and under high tensile loads. In such cases it has been found appropriate to replace a portion of the perlite with a quantity of substantially acid-insoluble thermoplastic fibers, which subject matter is claimed in our European Patent Application 81900611.5 (International Publication No. WO 81/02368.

The compositions are formed into sheets of paper, from which the separator materials used in the present invention are made, in the manner of conventional paper making. The perlite fiber mixture is dispersed in water, or preferably an aqueous acid slurry (pH of about 3), which is stirred so as to cause the perlite and fibers to become thoroughly and randomly mixed with each other. The perlite/fiber mixture is then deposited from the slurry onto a conventional paper making screen or wire as in a Fourdrinier machine or a Rotorformer machine to form a matted paper. For these purposes the perlite in the furnish should not contain more than about 5 percent, preferably not more than about 1 percent, of "floaters", which are perlite particles which float on the surface of the water slurry. Floaters are detrimental because they do not get incorporated into the fiber matrix of the paper, but are deposited last as the slurry drains and thus form a loose dusty layer on the surface of the paper. Quantities of floaters greater than those mentioned above merely increase the problem. The paper formed of the fibers and perlite particles is then dried and collected in a conventional manner.

Statement of Industrial Application

The materials are used according to the present invention as separators and reservoirs in starved electrolyte lead/acid storage batteries. Batteries using such materials will in turn find application for many electrical power generating uses including automotive electrical systems.

## Claims

1. A starved electrolyte lead/acid battery having separators for absorbing and containing electrolyte, characterized by a separator composition comprising a mixture of 30 percent to 80 percent by weight of expanded perlite and 20 percent to 70 percent by weight of glass fiber, said glass fibers having diameters in the range of from 0,3 to 1,0 micrometers and said perlite having particle sizes in the range of from 3 to 100 micrometers.

2. A battery as in claim 1, characterized in, that the composition is consisting of said expanded perlite and said glass fibers except for a small amount of impurities.

3. A battery as in claim 1 or 2, characterized in that said expanded perlite is present in an amount of 50 percent to 70 percent by weight of the composition and that glass fibers is present in an amount of 30 percent to 50 percent by weight of the composition.

4. A battery as in any of claims 1, 2 or 3, characterized in that said expanded perlite has partide sizes in the range of from 10 to 35 micrometers.

5. A paper as separator material in a starved electrolyte lead/acid battery, characterized by the composition characterising any of claims 1 to 4 in matted form.

**Patentansprüche**

1. Bleisäurebatterie mit begrenzter Elektrolytaufnahme, die Separatoren zum Aufsaugen und Halten von Elektrolyt aufweisen, gekennzeichnet durch eine Separatorzusammensetzung mit einer Mischung von 30 bis 80 Gew.% expandierten Perlits und 20 bis 70 Gew.% Glasfasern, wobei die Glasfasern einen Durchmesser im Bereich von 0,3 bis 1,0 Mikrometer und das Perlit Partikelgrößen im Bereich von 3 bis 100 Mikrometer aufweisen.

2. Batterie gemäß Anspruch 1, dadurch gekennzeichnet, daß die Zusammensetzung bis auf einen kleinen Anteil an Fremdbestandteilen aus dem expandierten Perlit und den Glasfasern besteht.

3. Batterie gemäß Anspruch 1 oder 2, dadurch gekennzeichnet, daß das expandierte Perlit in einer Länge von 50 bis 70 Gew.% der Zusammensetzung vorliegt, und daß die Glasfaser in einer Menge von 30 bis 50 Gew.% der Zusammensetzung vorliegt.

4. Batterie gemäß einem der Ansprüche 1, 2 oder 3, dadurch gekennzeichnet, daß das expandierte Perlit Teilchengrößen im Bereich von 10 bis 35 Mikrometer aufweist.

5. Papier als Separatormaterial bei einer Bleisäurebatterie mit begrenzter Elektrolytaufnahme, gekennzeichnet durch eine in einem der Ansprüche 1 bis 4 gekennzeichnete Zusammensetzung in verfilzter Ausbildung.

**Revendications**

1. Batterie plomb/acide à électrolyte appauvri présentant des séparateur pour absorber et contenir de l'électrolyte et caractérisée par une composition de séparateur constituant un mélange de 30 à 80 % en poids de perlite expansée et 20 à 70 % en poids de fibre de verre, ces fibres de verre ayant des diamètres de la gamme de 0,3 à 1,0 μm et la perlite ayant des grosseurs de particules de la gamme de 0,3 à 1,0 μm.

2. Batterie selon la revendications 1, caractérisée en ce que la composition est formée de la perlite expansée et des fibres de verre, à part une petite quantité d'impuretés.

3. Batterie selon l'une des revendications 1 ou 2, caractérisée en ce que la perlite expansée est présente à raison de 50 à 70 % du poids de la composition et que la fibre de verre est présente à raison de 30 à 50 % du poids de la composition.

4. Batterie selon l'une quelconque des revendications 1, 2 ou 3, caractérisée en ce que la perlite expansée a des grosseurs de particules de la gamme de 10 à 35 μm.

5. Papier en tant que matière de séparateur dans une batterie plomb/acide à électrolyte appauvri, caractérisé par la composition qui caractérise l'une quelconque des revendications 1 à 4, sous forme feutrée.